# EUROPÄISCHE PATENTSCHRIFT

(11) **EP 2 920 679 B1**
(45) Veröffentlichungstag und Bekanntmachung des Hinweises auf die Patenterteilung: **27.01.2021**
(21) Anmeldenummer: 13792861.0
(22) Anmeldetag: 06.11.2013
(51) Int. Cl.: G06F 3/0488

(54) **INFORMATIONSWIEDERGABESYSTEM UND VERFAHREN ZUR INFORMATIONSWIEDERGABE**
INFORMATION PLAYBACK SYSTEM AND METHOD FOR INFORMATION PLAYBACK
SYSTÈME DE REPRODUCTION D'INFORMATION ET PROCÉDÉ DE REPRODUCTION D'INFORMATION

(30) Priorität: 14.11.2012 DE 102012022312
(43) Veröffentlichungstag der Anmeldung: 23.09.2015
(73) Patentinhaber: Volkswagen Aktiengesellschaft, 38440 Wolfsburg (DE)
(72) Erfinder: KÖTTER, Nils, 38126 Braunschweig (DE); WILD, Holger, 10179 Berlin (DE); WENGELNIK, Heino, 38442 Wolfsburg (DE); ALTHOFF, Frank, 31275 Lehrte (DE)
(86) Internationale Anmeldenummer: PCT/EP2013/073124
(87) Internationale Veröffentlichungsnummer: WO 2014/075962

(56) Entgegenhaltungen:
- EP-A1- 2 169 523
- EP-A1- 2 330 383
- DE-A1-102009 058 145
- US-A1- 2010 088 634
- US-A1- 2011 196 578
- US-A1- 2012 176 322

## Beschreibung

Die vorliegende Erfindung betrifft ein Informationswiedergabesystem gemäß Anspruch 1, ein Verfahren zur Informationswiedergabe gemäß Anspruch 14 und ein Programm mit einem Programmcode zum Durchführen eines Verfahrens zur Informationswiedergabe gemäß Anspruch 15.

In modernen Fahrzeugen gibt es bereits heute eine große Anzahl von Geräten, die der Wiedergabe von unterschiedlichsten Informationen dienen. Die wiederzugebenden Informationen reichen von Fahrzeugzustandsparametern, wie z. B. Geschwindigkeit, Motordrehzahl, Tankfüllstand oder Kilometerzähler, über Navigations- und Kommunikationsinformationen bis hin zu Unterhaltungsmedien, wie z. B. Filme, Radio oder Spiele. Dabei wird die Anzahl der verfügbaren Informationen immer größer. Entsprechend steigt auch die Anzahl und Vielfalt der Anzeigesysteme. Heute können beispielsweise neben analogen Anzeigeinstrumenten auch LED-Anzeigen (Light Emitting Diode, Leuchtdiode), TFT-Bildschirme (Thin Film Transistor, Dünnschichttransistor) oder berührungsempfindliche Bildschirme, sogenannte Touchscreens, vorgefunden werden.

Die Bedienung der Wiedergabesysteme sollte dabei möglichst einfach und intuitiv gestaltet werden, damit der Benutzer des Fahrzeugs bei der Steuerung des Wiedergabesystems möglichst wenig vom Steuern des Fahrzeugs abgelenkt wird. Je weniger der Fahrer von seiner wichtigsten Tätigkeit, dem Steuern des Fahrzeugs, abgelenkt wird, desto höher ist wiederum die Benutzungssicherheit des Informationswiedergabesystems.

EP 2 330 383 A1 zeigt ein Informationsaerät für einen Fahrzeuaführer und eine Methode zur Kontrolle eines solchen Gerätes. Eine Vielzahl von Applikationen wird parallel verarbeitet und umfasst eine aeoarafische Lokalisierung.

US 2012/0176322 A1 lehrt ein System und eine Methode zur Präsentation mehrerer Rahmen auf einem Touchscreen. Die Methode umfasst die Auffindung der diversen Berührungszonen zumindest für eine Aktivierungszeit.

US 2010/0088634 A1 zeigt eine Mehrfachfenster-Verwaltungsgerät sowie ein entsprechendes Programm und Speichermedium.

EP 2169 523 A1 lehrt eine Methode zur Generierung diverser Fensterrahmen (window frames), ein entsprechendes elektronisches Gerät und ein Computerprogramm zur Benutzung der Methode.

DE 10 2009 058 145 A1 lehrt ein Bedienverfahren für eine Anzeigevorrichtung eines Fahrzeugs und eine entsprechende Anzeigevorrichtung für ein Fahrzeug.

Es besteht daher der Bedarf, ein Informationswiedergabesystem zu schaffen, dass eine einfache und intuitive Bedienung ermöglicht, um die Benutzungssicherheit des Informationswiedergabesystems zu erhöhen.

Diesen Bedarf trägt ein Informationswiedergabesystem gemäß Anspruch 1, ein Infotainmentsystem eines Fahrzeuges gemäß Anspruch 7, ein Verfahren zur Informationswiedergabe gemäß Anspruch 8 und ein Computerprogramm gemäß Anspruch 9 Rechnung.

Einige Ausführungsbeispiele beziehen sich auf ein Informationswiedergabesystem in einem Fahrzeug mit einem Prozessor, der ausgelegt ist, um ein Video- oder Steuersignal zu erzeugen und an eine Anzeigeeinrichtung bereitzustellen, sodass durch das Video- oder Steuersignal eine Wiedergabe von zumindest zwei unterschiedlichen Inhalten in zwei aneinandergrenzenden Teilflächen einer Anzeigefläche der Anzeigeeinrichtung veranlasst wird. Ferner ist der Prozessor ausgelegt, um das Video- oder Steuersignal zu erzeugen, so dass eine Grenze zwischen den zwei Teilflächen verschiebbar ist, basierend auf einer von der Anzeigeeinrichtung erfassten, durch eine Berührung eines Benutzers verursachten Auswahl eines Anzeigeaufteilungstastfeldes in einer der beiden Teilflächen, basierend auf einer von einer Eingabeeinrichtung erfassten Annäherung eines Benutzers an eine der beiden Teilflächen oder basierend auf einer von einer Eingabeeinrichtung erfassten, vordefinierten Bewegung eines Benutzers in orthogonal zu der Grenze zwischen den zwei Teilflächen gerichteter Richtung, sodass sich ein Verhältnis der Flächenanteile der beiden Teilflächen an der Anzeigefläche der Anzeigevorrichtung verändert.

Durch die Verschiebbarkeit der Grenze zwischen Teilflächen der Anzeigeeinrichtung, kann der Benutzer sehr flexibel auswählen, welche Inhalte in welchen Teilflächen der Anzeigeeinrichtung angezeigt werden sollen und wie viel der Anzeigefläche dafür verwendet werden soll. Da es sich dabei um eine sehr häufig genutzte Funktion während einer Fahrt handelt (z.B. Wechseln des Radiosenders, Bedienen des Navigationsgerätes, Steuern der Klimaanlage oder Benutzung eines Telefons) ist eine einfache und intuitive Bedienbarkeit wünschenswert. Durch die Verschiebbarkeit der Grenze zwischen Teilflächen durch Berührung von Anzeigeaufteilungstastfeldern auf der Anzeigefläche der Anzeigeeinrichtung, durch die Annäherung an eine der beiden Teilflächen oder durch die Erfassung einer vordefinierten Bewegung des Benutzers orthogonal zu der Grenze, kann diese einfache und intuitive Bedienbarkeit gewährleistet werden. Durch diese einfache und intuitive Bedienbarkeit kann die Benutzungssicherheit des Informationswiedergabesystems deutlich erhöht werden.

In einigen Ausführungsbeispielen ist die Anzeigeeinrichtung ein berührungsempfindlicher Bildschirm und die Grenze zwischen den zwei Teilflächen kann basierend auf einer von dem berührungsempfindlichen Bildschirm erfassten, durch eine Berührung eines Benutzers verursachten Auswahl des Anzeigeaufteilungsfelds in einer der beiden Teilflächen verschoben werden. Die Anzeigeeinrichtung dient also gleichzeitig als Eingabeeinrichtung. Dadurch kann der Benutzer durch einfache und intuitive Berührung eines entsprechenden Tastenfelds auf dem berührungsempfindlichen Bildschirm die Flächenaufteilung verändern.

Bei einigen Ausführungsbeispielen ist eine Eingabeeinrichtung ein ortsauflösender Annäherungssensor, der ausgelegt ist, um eine Annäherung eines Benutzers zu erkennen und festzustellen, an welche der beiden Teilflächen sich der Benutzer annähert. Dadurch kann der Benutzer bereits durch Annäherung, also bereits vor einer Berührung der Anzeigeeinrichtung, die Flächenaufteilung beeinflussen. Auf diese Weise ist es für den Benutzer ausreichend, sich nur sehr grob, also mit geringer Treffsicherheit, an die Anzeige anzunähern, um die gewünschte Veränderung der Flächenaufteilung zu erreichen, was insbesondere bei einer Fahrt auf unebenem Gelände oder bei hohen Geschwindigkeiten die Bedienung deutlich vereinfacht und so die Benutzungssicherheit erhöht.

Einige Ausführungsbeispiele beziehen sich auf ein Informationswiedergabesystem, bei dem eine Eingabeeinrichtung ein berührungsempfindlicher Bildschirm ist, der ausgelegt ist, um die vordefinierte Bewegung auf seiner Oberfläche zu erfassen, oder bei dem eine Eingabeeinrichtung ein Kamerasystem ist, das ausgelegt ist, um die vordefinierte Bewegung durch eine Auswertung einer Gestik des Benutzers zu erfassen. Dabei kann der Prozessor das Video- oder Steuersignal so erzeugen, dass die Grenze in Richtung der Bewegung verschoben wird. Dadurch kann die Grenze z.B. durch eine Wischbewegung in sehr einfacher und intuitiver Weise in Richtung der Bewegung des Benutzers verschoben werden. Dies kann über das Kamerasystem durch eine Gestensteuerung oder durch eine Bewegung auf der Oberfläche des berührungsempfindlichen Bildschirms realisiert werden.

Bei einigen Ausführungsbeispielen ist der Prozessor ausgelegt, um das Video- oder Steuersignal zu erzeugen, so dass die Grenze nur an vordefinierte Stellen verschoben werden kann. Die Grenze kann also nicht kontinuierlich und an beliebige Stellen verschoben werden, sondern kann nur in diskreten Schritten an vordefinierte Stellen verschoben werden. Dadurch kann einerseits bei einer Fahrt durch unebenes Gelände oder bei hoher Geschwindigkeit ermöglicht werden, dass der Benutzer durch ungewollte Bewegungen die Grenze an eine ungewollte Stelle verschiebt (z.B. eine Teilfläche sehr klein macht) oder einer Teilfläche ungewollt ganz ausblendet. Ebenso kann bei einer Bedienung des Informationswiedergabesystems durch Berührung eines Anzeigeaufteilungstastfeldes erreicht werden, dass sich die Grenze bei Betätigung des Tastfeldes beispielsweise an die nächste vordefinierte Stelle bewegt.

Einige Ausführungsbeispiele beziehen sich auf ein fest installiertes Infotainmentsystem eines Fahrzeuges mit einem Informationswiedergabesystem nach dem vorher beschriebenen Konzept. Das fest installierte Infotainmentsystem kann leicht bei der Konstruktion des Fahrzeugs berücksichtigt werden und ideal in das Fahrzeug integriert werden, sodass der Benutzer möglichst einfach und bequem Zugang zu den nötigen Informationen über ein oder mehrere Anzeigeeinrichtungen hat und das Informationswiedergabesystem möglichst einfach und intuitiv bedienen kann.

Nachfolgend werden unter Bezugnahme auf die beiliegenden Figuren Ausführungsbeispiele näher erläutert. Es zeigen:
- Figur 1: ein Blockdiagramm eines Informationswiedergabesystem;
- Figur 2a bis 2i: zeigen in Beispielen, die nicht unter die Ansprüche fallen, eine schematische Darstellung der Bedienung eines Informationswiedergabesystems mit einem Annäherungssensor und einem berührungsempfindlichen Bildschirm;
- Figur 3a bis 3h: eine schematische Darstellung der Bedienung eines Informationswiedergabesystems mit einem Annäherungssensor und einem berührungsempfindlichen Bildschirm; und
- Figur 4: ein Flussdiagramm eines Verfahrens zur Informationswiedergabe.

Bei der nachfolgenden Beschreibung der beigefügten Figuren, die Ausführungsbeispiele zeigen, bezeichnen gleiche Bezugszeichen gleiche oder vergleichbare Komponenten. Ferner werden zusammenfassende Bezugszeichen für Komponenten und Objekte verwendet, die mehrfach in einem Ausführungsbeispiel oder in einer Zeichnung auftreten, jedoch hinsichtlich eines oder mehrerer Merkmale gemeinsam beschrieben werden. Komponenten oder Objekte, die mit gleichen oder zusammenfassenden Bezugszeichen beschrieben werden, können hinsichtlich einzelner, mehrerer oder aller Merkmale, beispielsweise ihrer Dimensionierungen, gleich, jedoch gegebenenfalls auch unterschiedlich ausgeführt sein, sofern sich aus der Beschreibung nicht etwas anderes explizit oder implizit ergibt.

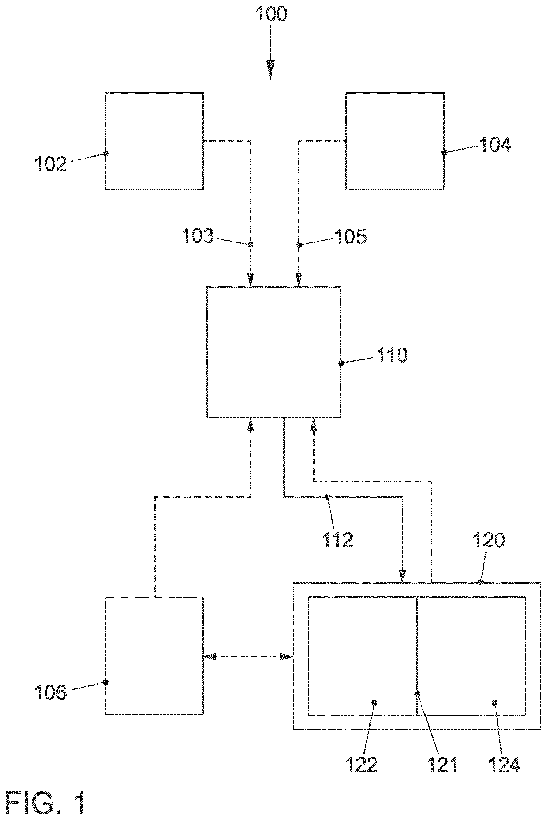

Figur 1 zeigt ein Blockdiagramm eines Informationswiedergabesystems 100 in einem Fahrzeug gemäß eines Ausführungsbeispiels. Das Informationswiedergabesystem 100 umfasst einen Prozessor 110, der ein Video- oder Steuersignal 112 erzeugt und an eine Anzeigeeinrichtung 120 bereitstellt, sodass durch das Video- oder Steuersignal 112 eine Wiedergabe von zumindest zwei unterschiedlichen Inhalten 103, 105 in zwei aneinander grenzenden Teilflächen 122, 124 einer Anzeigefläche der Anzeigeeinrichtung 120 veranlasst wird. Ferner erzeugt der Prozessor 110 das Video- oder Steuersignal 112, sodass eine Grenze 121 zwischen den zwei Teilflächen 122, 124 verschiebbar ist. Dabei ist die Grenze 121 verschiebbar, basierend auf einer von der Anzeigeeinrichtung 120 erfassten, durch eine Berührung eines Benutzers verursachten Auswahl oder Betätigung eines Anzeigeaufteilungstastfeldes in einer der beiden Teilflächen 122, 124, basierend auf einer von einer Eingabeeinrichtung 106 erfassten Annäherung eines Benutzers an eine der beiden Teilflächen 122, 124 oder basierend auf einer von einer Eingabeeinrichtung 106 erfassten vordefinierten Bewegung eines Benutzers in orthogonal zu der Grenze 121 zwischen den zwei Teilflächen 122, 124 gerichteter Richtung. Dadurch verändert sich ein Verhältnis der Flächenanteile der beiden Teilflächen 122, 124 an der Anzeigefläche der Anzeigevorrichtung 120 zueinander.

Durch die Verschiebbarkeit der Grenze durch Berührung eines entsprechenden Tastfeldes auf der Anzeigeeinrichtung, durch Annäherung des Benutzers an die Anzeigeeinrichtung oder durch das Erfassen einer vordefinierten Bewegung orthogonal zu der Grenze, kann die Grenze zwischen den zwei Teilflächen auf einfache und intuitive Art verschoben werden. Durch dieses einfache Bedienkonzept kann die Benutzungssicherheit des Informationswiedergabesystems durch den Fahrer eines Fahrzeugs deutlich erhöht werden. In anderen Worten, der Benutzer kann also, um die Flächenaufteilung der Anzeigeeinrichtung zu verändern, einfach auf ein Tastfeld drücken, bereits durch Annäherung an eine Teilfläche die Grenze verschieben oder durch eine vordefinierte Bewegung die Grenze verschieben. Der Benutzer kann die Aufteilung der Anzeigefläche der Anzeigeeinrichtung 120 individuell gestalten und bei Bedarf verändern.

Die Grenze 121 kann entweder basierend auf einer Berührung eines entsprechenden Tastfeldes auf der Anzeigeeinrichtung oder durch Annäherung des Benutzers an die Anzeigeeinrichtung oder durch das Erfassen einer vordefinierten Bewegung verschoben werden. Alternativ kann die Grenze 121 aber auch basierend auf mehreren oder einer beliebigen Kombination dieser Möglichkeiten oder basierend auf all diesen Möglichkeiten verschoben werden.

Die wiederzugebenden Inhalte 103, 105 können, ebenso wie ihre Quellen 102, 104, unterschiedlichster Art sein. Beispielsweise kann es sich bei wiederzugebenden Inhalt 103, 105 um Unterhaltungsinformationen (z. B. Film, Radio oder Spiele), Fahrzeugzustandsinformationen (z. B. Geschwindigkeit, Motortemperatur, Motordrehzahl oder Kilometerstand), Kommunikationsinformationen (z.B. Telefonbuch) oder Navigationsdaten handeln. Ein Inhalt oder eine Information kann dabei beliebig definiert werden. Ein Inhalt kann z.B. ein einzelnes oder mehrere Bits des Video- oder Steuersignal, ein darzustellender Wert (z.B. Geschwindigkeit), ein ganzes Bild (z.B. ein Bild einer Navigationskarte oder eine Zusammenstellung von wiederzugebenden Inhalten, die gemeinsam auf einem Bild dargestellt werden), oder ein Bildausschnitt oder ähnliches sein. Entsprechend kann eine Informationsquelle 102, 104 beispielsweise ein DVD-Player, ein Radiogerät, ein Computer, ein Laptop, ein Fahrzeugsensoren oder ein Navigationsgerät sein. Die Informationen können in einem für die jeweilige Informationsquelle üblichen Datenformat zur Verfügung gestellt werden.

Die zumindest zwei unterschiedlichen Inhalte 103, 105 können von derselben Informationsquelle 102, 104 (z.B. Liste aller Interpreten in einer Musikdatenbank als erster Inhalt und das aktuell wiedergegebene Lied als zweiter Inhalt, die beide von demselben Abspielgerät als Informationsquelle stammen) oder von zwei unterschiedlichen Informationsquellen 102, 104 stammen (z.B. ein erster Inhalt von einem Navigationsgerät und ein zweiter Inhalt von einem Radiogerät), wie es z.B. in Figur 1 angedeutet ist, wiedergegeben werden.

Die zumindest eine Informationsquelle 102, 104, die Eingabeeinrichtung 106 und die Anzeigeeinrichtung 120 können als externe Einheit an das Informationswiedergabesystem 100 (z.B. einzeln oder über einen Kommunikationsbus) angeschlossen sein, wie es in dem Beispiel von Figur 1 durch die gestrichelten Linien angedeutet ist. Alternativ kann auch eine oder mehrere dieser Einheiten Teil des Informationswiedergabesystems 100 sein.

Der Prozessor 110 kann Steuersignale für das Verschieben der Grenze 121 zwischen den Teilflächen 122, 124 beispielsweise von einer Eingabeeinrichtung 106 oder von der Anzeigeeinrichtung 120 als Eingabeeinrichtung selbst erhalten, wie es durch die gestrichelten Linien in Figur 1 angedeutet ist.

Die Eingabeeinrichtung 106 kann auch Teil der Anzeigeeinrichtung 120 sein und kann ein Steuersignal an den Prozessor 110 bereitstellen, wie es durch die gestrichelte Linie zwischen der Eingabeeinrichtung 106 und der Anzeigeeinrichtung 120 und der Anzeigeeinrichtung 120 und dem Prozessor 110 angedeutet ist.

Die Anzeigeeinrichtung 120 kann beispielsweise eine LED-Anzeige (light emitting diode, Leuchtdiode) ein TFT-Bildschirm (Thin Film Transistor, Dämmschichttransistor) ein berührungsempfindlicher Bildschirm, ein sogenannter Touchscreen oder ein Head-Up-Display (Kopf-Hoch-Anzeigesystem) sein.

Das Informationswiedergabesystem 100, auch Vorrichtung zur Wiedergabe von Informationen genannt, kann eine eigene Einheit in dem Fahrzeug bilden oder Teil des Infotainmentsystems (Informations- und Unterhaltungssystem) des Fahrzeugs sein. Der Benutzer des Informationswiedergabesystems 100 kann sowohl der Fahrer als auch ein anderer Insasse des Fahrzeugs sein.

Je nach verwendeter Anzeigeeinrichtung 120 kann der Prozessor 110 ein entsprechendes Video- oder Steuersignal 112 bereitstellen, das die Anzeigeeinrichtung 120 veranlasst, die zumindest zwei aneinandergrenzenden Teilflächen 122, 124 mit den zumindest zwei unterschiedlichen Inhalten 103, 105 für den Benutzer anzuzeigen. Allgemein kann die Anzeigefläche der Anzeigeeinrichtung 120 in beliebig viele Teilflächen unterteilt sein, von denen zumindest zwei aneinandergrenzende Teilflächen 122, 124, eine verschiebbare Grenze 121 aufweisen. Da dem Benutzer in einem Fahrzeug die Inhalte in einer ausreichenden Größe zur Verfügung gestellt werden sollten, damit der Fahrer auch in seiner normalen Sitzposition, also auf größere Entfernung, die Inhalte problemlos wahrnehmen kann, kann die Unterteilung der Anzeigefläche beispielsweise auf 2, 3 oder 4 Teilflächen beschränkt werden. In den in den Figuren gezeigten Beispielen ist die Anzeigefläche lediglich in zwei Teilflächen 122, 124 unterteilt, es können jedoch, wie eben erwähnt, auch mehr Teilflächen mit unterschiedlichen Inhalten von der Anzeigeeinrichtung angezeigt werden.

Die Anzeigefläche der Anzeigeeinrichtung 120 kann eine beliebige Form aufweisen, wird jedoch in den meisten Fällen rechteckig oder quadratisch sein.

Die Grenze 121 kann eine beliebige Geometrie (z.B. gerade, wellenförmig, kreisbogenförmig) aufweisen und die Teilflächen 122, 124 in einer beliebigen Richtung voneinander trennen. Meist wird es sich jedoch bei der Grenze 121 um eine Gerade handeln, auch wenn die Grenze andere Formen haben kann. Ferner kann die Grenze 121 beispielsweise im Wesentlichen parallel zu einem Rand der Anzeigefläche ausgerichtet sein, also insbesondere bei einer geraden Anordnung der Anzeigeeinrichtung im Fahrzeug (zumindest ein Rand der Anzeigefläche ist horizontal ausgerichtet) in horizontaler oder vertikaler Richtung.

Der Prozessor 110 kann das Video- oder Steuersignal 112 so erzeugen, dass die Grenze 121 zwischen den zwei Teilflächen 122, 124 für den Benutzer sichtbar auf der Anzeigefläche der Anzeigeeinrichtung 120 angezeigt wird. Alternativ kann auch schon durch die unterschiedlichen Inhalte 103, 105 in den aneinandergrenzenden Teilflächen 122, 124 für den Benutzer klar sein, wo die Grenze zwischen den Teilflächen 122, 124 verläuft, auch wenn die Grenze 121 nicht direkt (z.B. als Linie oder anderes grafisches Element) in der Anzeigefläche der Anzeigeeinrichtung 120 angezeigt wird. Aufgrund des einfachen und intuitiven Bediensystems ist es für den Benutzer auch nicht notwendig, genau zu wissen, wo die Grenze zwischen den Teilflächen 122, 124 verläuft, solange der Benutzer anhand der Inhalte in etwa die Aufteilung der Anzeigefläche wahrnehmen kann. Bei der Steuerung durch die Betätigung eines Anzeigeaufteilungstastfelds in einer der beiden Teilflächen 122, 124 durch eine Berührung der Anzeigefläche der Anzeigeeinrichtung 120 durch den Benutzer, ist für den Benutzer ohnehin klar, an welcher Stelle er die Anzeigeeinrichtung 120 berühren muss, um die Verhältnisse der Flächenanteile der beiden Teilflächen 122, 124 zu verändern und somit auch die Grenze 121 zu verschieben. Bei der Steuerung durch eine Annäherung an eine der beiden Teilflächen, ist es für den Benutzer ebenfalls nicht notwendig, genau zu wissen, wo die Grenze 121 zwischen den zwei Teilflächen 122, 124 verläuft, da es beispielsweise ausreichend ist, sich einem wiederzugebenden Inhalt zu nähern, der ohnehin einer der beiden Teilflächen 122, 124 zugeordnet ist. Ebenso ist es bei einer Steuerung über eine vordefinierte Bewegung orthogonal zu der Grenze 121 nicht notwendig, genau zu wissen, wo die Grenze 121 zwischen den Teilflächen 122, 124 verläuft. Dies spiegelt wiederum die einfache und intuitive Bedienbarkeit wieder.

Beispielsweise kann die Grenze 121 zwischen den beiden Teilflächen 122, 124 im Wesentlichen vertikal zwischen den beiden Teilflächen 122, 124 von einem oberen Rand der Anzeigefläche der Anzeigeeinrichtung 120 zu einem unteren Rand der Anzeigefläche der Anzeigeeinrichtung 120 verlaufen.

Allgemein kann die Grenze 121 kontinuierlich oder nur in diskreten Schritten verschoben werden. Beispielsweise kann der Prozess 100 das Video- oder Steuersignal 112 so erzeugen, dass die Grenze 121 nur in vordefinierten Schritten (an diskret verteilten Stellen) verschoben werden kann. Dadurch kann beispielsweise verhindert werden, dass der Benutzer durch eine ungenaue Bewegung einer der Teilflächen auf eine nicht mehr brauchbare Größe verkleinert oder durch eine unruhige Fahrt die Grenze 121 unkontrolliert verschiebt. Z.B. kann die Grenze 121 immer nur in der Mitte der Anzeigefläche, bei einem Drittel oder zwei Drittel der Anzeigefläche oder bei einem, zwei oder drei Viertel der Anzeigefläche angeordnet sein.

Durch die Verschiebung der Grenze 121 wir ein Verhältnis der Flächenanteile der beiden Teilflächen 122, 124 an der Anzeigefläche verändert. Diese Veränderung kann zumindest vorübergehend bleibend sein, da der Benutzer die Größen der Teilflächen meist verändert, sodass er danach die gewünschten Inhalte in den Teilflächen mit dem eingestellten Flächengrößen bereitgestellt bekommt und das Größenverhältnis nicht gleich wieder verändert werden soll. In anderen Worten, nach Verschieben der Grenze 121 durch Berührung eines entsprechenden Tastfeldes auf der Anzeigeeinrichtung, durch Annäherung des Benutzers an die Anzeigeeinrichtung oder durch das Erfassen einer vordefinierten Bewegung orthogonal zu der Grenze 121, kann die Grenze 121 vorerst auf dieser neuen Position verbleiben. Die Grenze 121 kann beispielsweise so lange an ihrer Position verbleiben bis der Benutzer erneut durch Berührung eines entsprechenden Tastfeldes auf der Anzeigeeinrichtung, durch Annäherung des Benutzers an die Anzeigeeinrichtung oder durch das Erfassen einer vordefinierten Bewegung orthogonal zu der Grenze 121 ein Verschieben der Grenze vornimmt oder bis eine Ausnahmeregelung eintritt (z.B. ein wiederzugebender Inhalt mit höherer Priorität, beispielsweise eine Warnmeldung eingeblendet wird).

Die Verschiebung der Grenze 121 zwischen den Teilflächen 122, 124 kann basierend auf einer Auswahl eines Anzeigeaufteilungstastfeldes in einer der beiden Teilflächen 122, 124 erfolgen. Dazu kann die Anzeigeeinrichtung 120 beispielsweise ein berührungsempfindlicher Bildschirm sein und die Grenze 121 zwischen den zwei Teilflächen 122, 124 kann basierend auf einer von dem berührungsempfindlichen Bildschirm erfassten, durch eine Berührung eines Benutzers verursachten Betätigung des Anzeigeaufteilungstastfeldes in einer der beiden Teilflächen 122, 124 verschoben werden. In anderen Worten, durch eine Betätigung eines Tastfeldes in einer der beiden Teilfläche 122, 124 kann der Benutzer einfach und intuitiv durch eine auch während der Fahrt einfach mögliche Bewegung die Flächenanteile der beiden Teilflächen 122, 124 zueinander verändern.

Das Anzeigeaufteilungstastfeld kann ein definierter Bereich des berührungsempfindlichen Bildschirms sein, der bei Berührung dazu führt, dass ein Signal an den Prozessor 110 gesendet wird, sodass dieser die Grenze 121 entsprechend verschiebt. Das Anzeigeaufteilungstastfeld kann dabei eine beliebige Form und beliebiges Aussehen aufweisen, solange der Benutzer erkennen kann, welche Funktion durch die Betätigung dieses Tastfeldes erreicht wird. Beispielsweise kann das Anzeigeaufteilungstastfeld eine pfeilartige Form oder eine pfeilartige Grafik aufweisen, die darauf hinweist, in welche Richtung sich die Grenze 121 bei Berührung des Anzeigeaufteilungstastfelds verschiebt. Dadurch kann der Benutzer beispielsweise einfach sehen, was er von der Betätigung der Taste zu erwarten hat. Ferner kann das Anzeigenaufteilungstastfeld beispielsweise in jener Teilfläche 122, 124 der beiden Teilflächen 122, 124 angeordnet werden, die durch Betätigung des Anzeigeaufteilungstastfeldes verkleinert wird. Ferner kann z.B. auch in beiden Teilflächen 122, 124 je ein Anzeigeaufteilungstastfeld angeordnet sein, das bei Betätigung zur Verkleinerung der jeweiligen Teilfläche 122, 124 in Bezug auf die andere Teilfläche 122, 124 führt.

Alternativ oder zusätzlich kann eine Eingabeeinrichtung 106 ein ortsaufgelöster Annäherungssensor sein, der eine Annäherung eines Benutzers (z.B. die Hand oder einen Finger des Benutzers) erkennt und feststellt, an welche der beiden Teilflächen 122, 124 sich der Benutzer annähert. In anderen Worten, unterschreitet der Benutzer mit seiner Hand oder seinem Finger einen definierten Abstand zu einer der beiden Teilflächen, kann dies der Annäherungssensor erfassen und dem Prozessor 110 mitteilen, sodass dieser die Grenze 121 entsprechend verschieben kann. Dadurch kann dem Benutzer ermöglicht werden, die Größen der Teilflächen 122, 124 bereits durch Annäherung an die Anzeigeeinrichtung 120 zu verändern, sodass der Benutzer, insbesondere während der Fahrt, nicht genau auf eine bestimmte Stelle der Anzeigeeinrichtung 120 oder ein anderes
Bedienelement gelangen muss.

Der ortsaufgelöste Annäherungssensor kann eine eigene Einheit sein oder in die Anzeigeeinrichtung 120 integriert sein. Es kann eine relativ grobe Ortsauflösung (z.B. auf 1cm, 2cm oder 5cm genau) ausreichend sein, sodass dieser feststellen kann, an welche der beiden Teilflächen sich der Benutzer annähert.

Beispielsweise kann der Prozessor 110 ausgelegt sein, um bei einer erfassten Annäherung an eine erste, kleinere Teilfläche der beiden Teilflächen 122, 124 das Video- oder Steuersignal 112 so zu erzeugen, dass die erste Teilfläche nach dem Verschieben der Grenze 121 gleich groß oder größer als die zweite der beiden Teilflächen 122, 124 ist. Dadurch kann der Benutzer sehr schnell und mit einer einfach auszuführenden Bewegung z.B. den Inhalt der kleineren Teilfläche größer darstellen lassen oder mehr Informationen zu dem Inhalt der kleineren Teilfläche anzeigen zu lassen.

Alternativ oder zusätzlich kann die Anzeigeeinrichtung 120 ein berührungsempfindlicher Bildschirm sein und der Prozessor 110 bei einer erfassten Annäherung an eine erste, größere Teilfläche der beiden Teilflächen 122, 124 das Video- oder Steuersignal 112 so erzeugen, dass nach erfasster Annäherung zumindest ein in der ersten Teilfläche angeordnetes betätigbares Tastenfeld im Vergleich zu davor größer dargestellt oder hervorgehoben ist. In anderen Worten, bei Annäherung an die ohnehin größere Teilfläche ist zu erwarten, dass der Benutzer eine Einstellung an dieser Teilfläche vornehmen möchte, sodass dem Benutzer die Bedienung deutlich vereinfacht wird, wenn ihm mögliche Betätigungsoptionen in Form von einem oder mehreren betätigbaren Tastfeldern vergrößert oder hervorgehoben werden. Dadurch kann dem Benutzer die Bedienung des Informationswiedergabesystems 100 weiter erleichtert werden und somit auch die Benutzungssicherheit weiter erhöht werden.

Ferner kann zusätzlich oder alternativ die Anzeigeeinrichtung 120 wiederum ein berührungsempfindlicher Bildschirm sein und der Prozessor 110 bei einer erfassten Annäherung an eine erste, größere Teilfläche der beiden Teilflächen 122, 124 das Video- oder Steuersignal 112 so erzeugen, dass nach erfasster Annäherung in der ersten Teilfläche eine Haltetaste als betätigbares Tastenfeld erscheint, wobei durch Betätigung der Haltetaste durch den Benutzer das Verhältnis der Flächenanteile der Teilflächen 122, 124 vorerst konstant gehalten wird. In anderen Worten, bei Annäherung des Benutzers an die größere der beiden Teilflächen kann der Benutzer über eine eingeblendete Haltetaste in Form eines betätigbaren Tastenfeldes ermöglicht werden, die Grenze 121 zwischen den Teilflächen 122, 124 konstant zu halten oder an ihrer Stelle einzufrieren. Dadurch kann dem Benutzer ermöglicht werden, falls er es wünscht, eine weitere Verschiebung der Grenze 121 zu unterbinden. Dabei kann das Verhältnis der Flächenanteile der Teilflächen 122, 124 oder die Position der Grenze 121 solange konstant gehalten werden, bis der Benutzer beispielsweise die Haltetaste erneut betätigt oder eine Ausnahmeregelung (z.B. ein wiederzugebender Inhalt mit höherer Priorität, beispielsweise eine Warnmeldung, eingeblendet wird) eintritt.

Alternativ oder zusätzlich kann der Prozessor 110 bei einer erfassten Annäherung an eine der beiden Teilflächen 122, 124 das Video- oder Steuersignal 112 so erzeugen, dass nach erfasster Annäherung in der einen Teilfläche ein Menü zur Auswahl eines in der einen Teilfläche wiederzugebenden Inhalts erscheint. In anderen Worten, der Benutzer möchte oft bei Annäherung an einen bestimmten Teil der Anzeigefläche auswählen, was in dieser Teilfläche angezeigt werden soll. Durch die Einblendung eines Auswahlmenüs bereits bei Annäherung, kann dem Benutzer diese Möglichkeit sehr einfach und schnell gegeben werden.

Allgemein kann die Anzeigevorrichtung zusätzlich beispielsweise in einen Vollbildmodus gehen, wenn der Benutzer für beide Teilflächen den gleichen Inhalt auswählt, dass zu diesem Inhalt mehr Information bereitgestellt werden kann.

Alternativ oder zusätzlich kann das Informationswiedergabesystem 100 durch eine erfasste, vordefinierte Bewegung gesteuert werden. Dazu kann eine Eingabeeinrichtung 106 beispielsweise ein berührungsempfindlicher Bildschirm sein, der die vordefinierte Bewegung auf seiner Oberfläche erfassen kann, oder die Eingabeeinrichtung 106 kann ein Kamerasystem sein, das die vordefinierte Bewegung durch eine Auswertung einer Gestik des Benutzers (also z.B. einer Bewegung im Raum, beispielsweise des Arms, der Hand oder eines Fingers des Benutzers) sein. Ferner kann der Prozessor 110 das Video- oder Steuersignal 112 so erzeugen, dass die Grenze 121 in Richtung der Bewegung verschoben wird. Dadurch kann dem Benutzer eine sehr intuitive Möglichkeit geboten werden, die Grenze 121 zwischen den Teilflächen 122, 124 zu verschieben. In anderen Worten, der Benutzer kann beispielsweise durch eine Berührung des Bildschirms eine Bewegung über den Bildschirm in horizontaler Richtung oder durch eine horizontale Bewegung im Raum, eine vertikale Grenze 121 zwischen den beiden Teilflächen 122, 124 in die Richtung der Bewegung verschieben. Z.B. kann eine Bewegung auf der Oberfläche des Bildschirms von links nach rechts die Grenze 121 ebenfalls von links nach rechts verschieben oder umgekehrt.

Eine Bewegung kann bereits als orthogonal zu der Grenze 121 erfasst oder erkannt werden, wenn der orthogonale Bewegungsanteil größer als der parallele Bewegungsanteil ist. Umso größer der orthogonale Bewegungsanteil ist, umso einfacher kann jedoch die Erkennung der Bewegung als die vordefinierte Bewegung erfolgen.

Zusätzlich kann die Eingabeeinrichtung 106 noch optional ausgelegt sein, um eine vordefinierte Bewegung des Benutzers in parallel zu der Grenze 121 zwischen den zwei Teilflächen 122, 124 gerichteter Richtung zu erfassen. Diese Information kann der Prozessor 110 verwenden, um das Video- oder Steuersignal 112 nach erfasster, parallel zur Grenze 121 verlaufender Bewegung so zu erzeugen, dass in einer der beiden Teilflächen 122, 124 ein basierend auf der erfassten Bewegung ausgewählter, anderer Inhalt wiedergegeben wird als vor Erfassen der Bewegung. Beispielsweise kann der Benutzer durch eine horizontale Bewegung eine vertikale Grenze 121 verschieben und basierend auf einer vertikalen Bewegung den Inhalt einer Teilfläche auswählen (z.B. Blättern in einem Menü durch die vertikale Bewegung).

In Kombination mit einem Annäherungssensor kann beispielsweise in einer Teilfläche ein Auswahlmenü bereits eingeblendet sein und durch parallel zu der Grenze 121 erfolgte Bewegung ein wiederzugebender Inhalt für die Teilfläche ausgewählt werden.

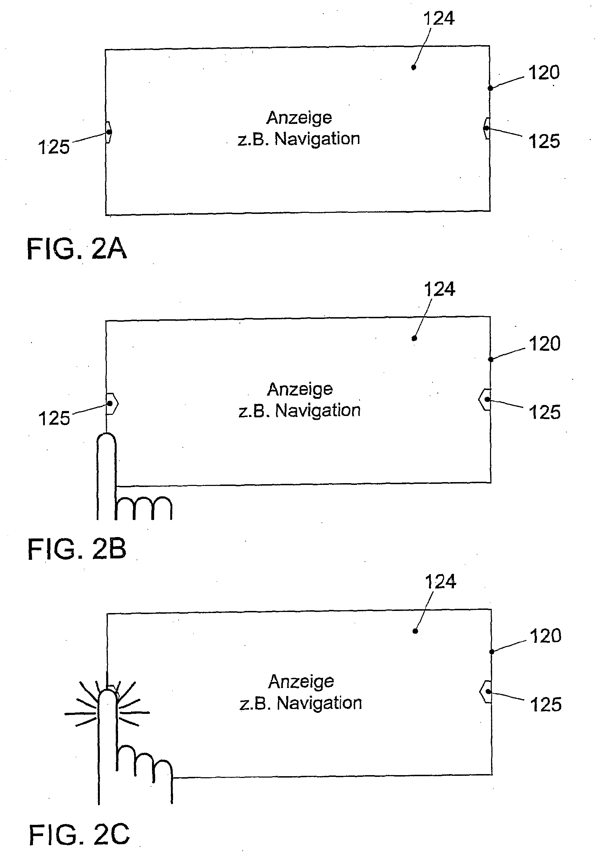

Die Fig. 2a bis 2i zeigen eine schematische Darstellung eines Beispiels, das nicht unter die Ansprüche fällt, für die Bedienung eines Informationswiedergabesystems mit einem Annäherungssensor und einem berührungsempfindlichen Bildschirm als Eingabeeinrichtung.

Fig. 2a zeigt dazu die Anzeigefläche einer Anzeigeeinrichtung 120 bei der ein wiederzugebender Inhalt als Vollbild (Fullscreen) wiedergegeben wird. Der Benutzer hat sich dabei noch nicht an die Anzeigeeinrichtung angenähert. Die Anzeige kann beispielsweise einen Inhalt zur Navigation wiedergeben. An zwei gegenüberliegenden Rändern (links und rechts) der Anzeigefläche sind in reduzierter Darstellung Anzeigeaufteilungstastfelder 125 eingeblendet.

Bei Annäherung einer Hand oder eines Fingers eines Benutzers, die durch den Annäherungssensor festgestellt werden kann, wechselt die reduzierte Anzeige der Anzeigeaufteilungstastfelder 125 in eine vergrößerte Darstellung der Anzeigeaufteilungstastfelder 125, sodass der Benutzer die Anzeigeaufteilungstastfelder einfacher durch Berührung betätigen kann, wie es in Fig. 2b gezeigt ist.

In Fig. 2c ist gezeigt, wie der Benutzer mit seinem Finger ein Anzeigeaufteilungstastfeld 125 durch Berührung betätigt.

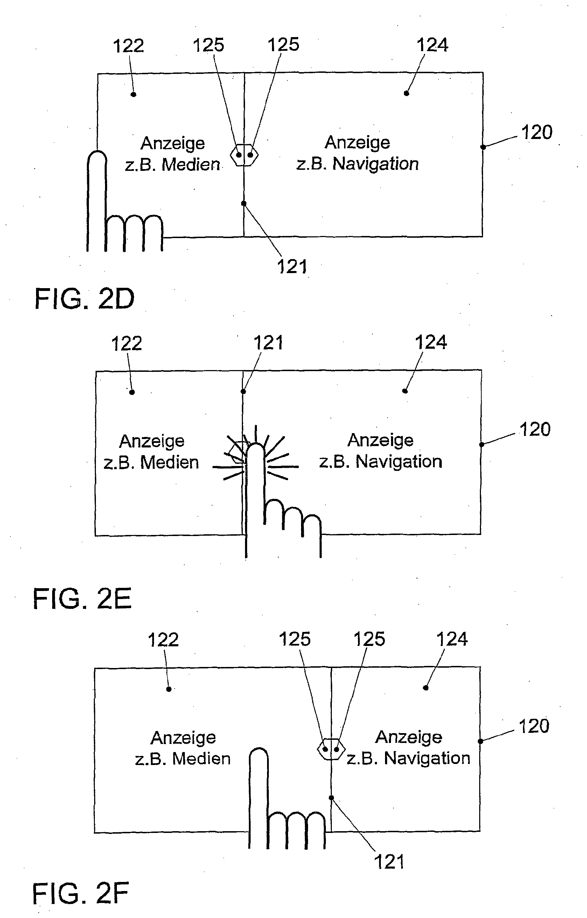

Daraufhin wird auf einer Teilfläche 122 der Anzeigefläche ein zweiter, unterschiedlicher Inhalt (z.B. Medien) angezeigt und der zuvor am Vollbild wiedergegebene Inhalt nur noch auf einer zweiten Teilfläche 124 wiedergegeben, wie es in Fig. 2d gezeigt ist. Zwischen den beiden Teilflächen erstreckt sich eine Grenze 121 vom oberen Rand der Anzeigefläche zum unteren Rand der Anzeigefläche. Zu beiden Seiten der Grenze 121 ist jeweils ein Anzeigeaufteilungstastfeld 125 eingeblendet. Das jeweilige Anzeigeaufteilungstastfeld 125 weist eine pfeilartige Form auf, die den Benutzer darauf hinweist, in welche Richtung sich die Grenze 121 bei Berührung des jeweiligen Anzeigeaufteilungstastfelds 125 verschiebt.

Durch den Tab (durch das Antippen) auf die Lasche (das Anzeigeaufteilungstastfeld) öffnet sich also in diesem Beispiel, das nicht unter die Ansprüche fällt, ein linker Splitscreen (Teilfläche der Anzeigefläche) auf ein Drittel. In anderen Worten, die Grenze 121 zwischen den Teilflächen 122, 124 ist hier in diskreten Abständen verschiebbar. In dem gezeigten Beispiel, das nicht unter die Ansprüche fällt, verschiebt sich die Grenze 121 vom linken Rand der Anzeigefläche bis auf ein Drittel der Breite der Anzeigefläche. Dadurch erfolgt in diesem Beispiel, das nicht unter die Ansprüche fällt, eine Aufteilung der Anzeigefläche in eine erste Teilfläche 122, die ein Drittel der Anzeigefläche einnimmt, und eine zweite Teilfläche 124, die zwei Drittel der Anzeigefläche einnimmt.

In Fig. 2e betätigt der Benutzer das Anzeigeaufteilungstastfeld 125 in einer der beiden Teilflächen, nämlich in der rechten Teilfläche 124. Er führt also wieder einen Tab auf eine Lasche aus.

Dadurch verschiebt sich die Grenze 121 weiter nach rechts (in Richtung der zweiten Teilfläche), sodass sich die zweite Teilfläche 124 verkleinert und die erste Teilfläche 122 vergrößert. Da sich die Grenze 122 in diskreten Abständen verschiebt, erstreckt sich die erste Teilfläche 122 nun über zwei Drittel der Breite der Anzeigefläche und die zweite Teilfläche 124 über ein Drittel der Breite der Anzeigefläche. In anderen Worten, durch die Betätigung des Anzeigeaufteilungstastfelds 125 bewegt sich die Grenze 121 in die durch die pfeilartige Form des Anzeigeaufteilungstastfelds 125 angedeutete Richtung. In dem gezeigten Beispiel, das nicht unter die Ansprüche fällt, verkleinert sich die Teilfläche 124 in der das betätigte Anzeigeaufteilungstastfeld 125 angeordnet ist, wie es in Fig. 2e gezeigt ist. Fig. 2f zeigt, wie sich die Grenze 121 weiter in Richtung der zweiten Teilfläche 124 verschoben hat und nun die erste Teilfläche 122 größer ist als die zweite Teilfläche 124.

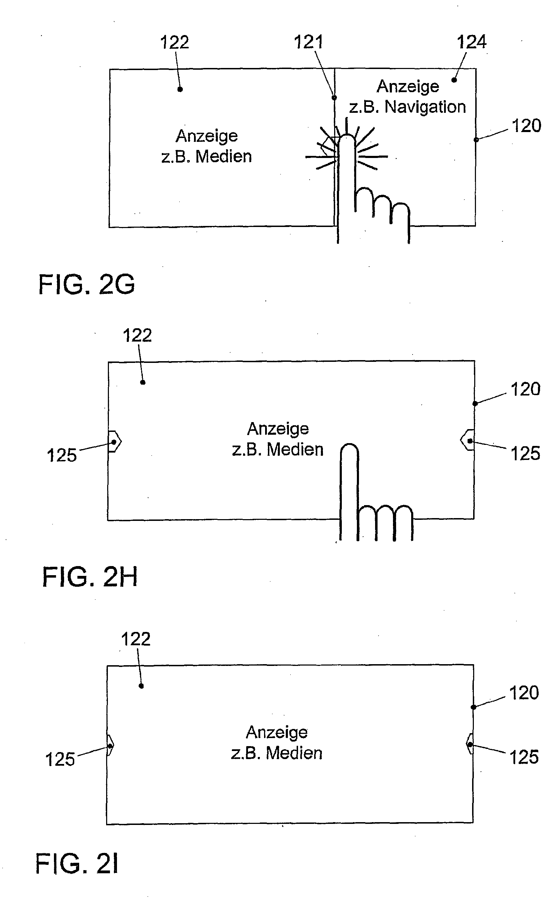

Betätigt nun der Benutzer nochmal das in der zweiten, kleineren Teilfläche 124 angeordnete Anzeigeaufteilungstastfeld, wie es in Fig. 2g gezeigt ist, so wird der in der zweiten Teilfläche 124 wiedergegebene Inhalt komplett ausgeblendet und die Grenze 121 verschiebt sich ganz an den rechten Rand, wie es in Fig. 2h gezeigt ist. Durch den Tab auf die Lasche vergrößert sich also der linke, Zwei-Drittel-Screen (die erste Teilfläche) auf das Vollbild (Fullscreen), also auf die gesamte Anzeigefläche. Da der Benutzer mit seiner Hand oder seinem Finger noch an die Anzeigeeinrichtung 120 angenähert ist, sind weiterhin die Anzeigeaufteilungstastfelder 125 in ihrer vergrößerten Darstellung eingeblendet. Entfernt sich der Benutzer von der Anzeigeeinrichtung 120 in eine nicht angenäherte Position, so werden die Anzeigeaufteilungstastfelder 125 nur noch in ihrer reduzierten Darstellung eingeblendet. Der wiederzugebende Inhalt der ursprünglich ersten Teilfläche wird nun als Vollbild wiedergegeben, wie es in Fig. 2i gezeigt ist.

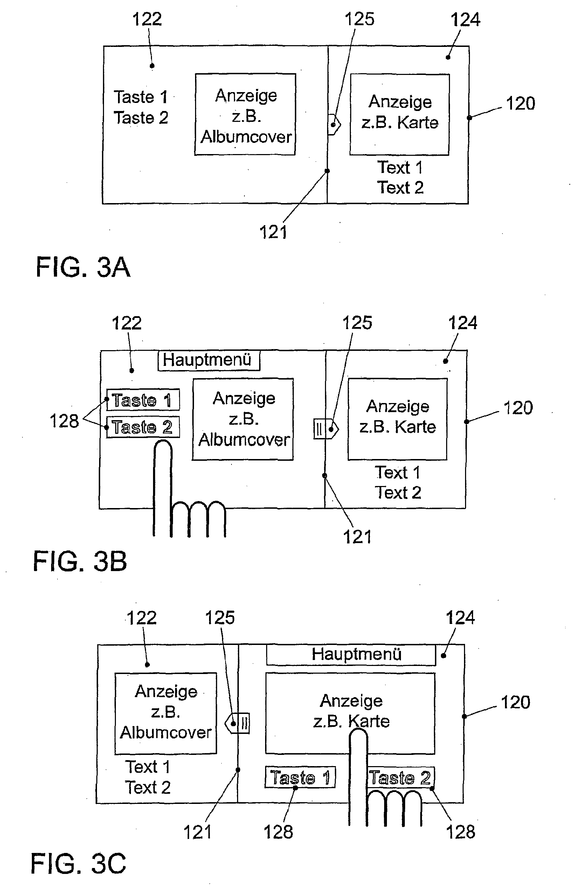

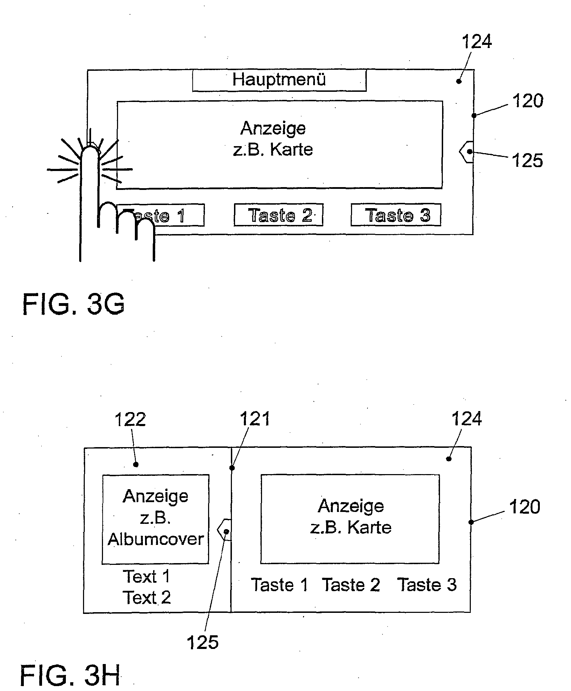

Die Fig. 3a bis 3h zeigen in einer schematischen Darstellung ein weiteres Beispiel für die Bedienung eines Informationswiedergabesystems mit einem Annäherungssensor und einem berührungsempfindlichen Bildschirm als Eingabeeinrichtung.

In Fig. 3a ist eine Anzeigefläche einer Anzeigeeinrichtung 120 mit einer ersten Teilfläche 122 (linke Teilfläche) und einer zweiten Teilfläche 124 (rechte Teilfläche) dargestellt. Dabei nimmt die erste Teilfläche zwei Drittel der Anzeigefläche und die zweite Teilfläche ein Drittel der Anzeigefläche ein. Natürlich könnten auch andere Aufteilungen vorgenommen werden oder mehr Teilflächen angeordnet werden. Die erste Teilfläche 122 gibt einen ersten wiederzugebenden Inhalt (z.B. ein Album Cover) mit zwei betätigbaren Tasten (Taste 1 und Taste 2) wieder. In der zweiten Teilfläche 124 wird ein anderer wiederzugebender Inhalt (z.B. eine Karte und Text) wiedergegeben. Ebenso ist in der zweiten Teilfläche 124 ein Anzeigeaufteilungstastfeld 125 angeordnet. Dies kann beispielsweise eine Default-Einstellung (Standardeinstellung) für einen nicht angenäherten Zustand des Benutzers sein.

Nähert sich beispielsweise der Benutzer mit seiner Hand oder seinem Finger der ersten, größeren Teilfläche 122 an, wie es in Fig. 3b gezeigt ist, so können beispielsweise die betätigbaren Tasten 128 größer dargestellt oder hervorgehoben werden. Zusätzlich kann beispielsweise eine Haltetaste als betätigbare Taste eingeblendet werden. Optional kann auch eine Überschrift (z.B. Hauptmenü) größer dargestellt oder hervorgehoben werden. In dem in Fig. 3b gezeigten Beispiel nähert sich der Benutzer also der Zwei-Drittel-Teilfläche (der größeren Teilfläche) an.

Nähert sich der Benutzer mit seiner Hand oder seinem Finger der zweiten, kleineren Teilfläche 124 an, so kann durch die erfasste Annäherung beispielsweise die Grenze 121 verschoben werden, sodass die zweite, kleinere Teilfläche 121 vergrößert wird. In dem in Fig. 3c gezeigten Beispiel verschiebt sich die Grenze 121 um ein Drittel der Breite der Anzeigefläche in Richtung der ersten Teilfläche 122, sodass die zweite Teilfläche 124 nun größer als die erste Teilfläche 122 ist. In anderen Worten, bei Annäherung an die Ein-Drittel-Teilfläche kann diese auf zwei Drittel vergrößert werden. Zusätzlich können optional auch in der nun vergrößerten zweiten Teilfläche 124 die betätigbaren Tasten 128 (z.B. Taste 1 und Taste 2) vergrößert dargestellt oder hervorgehoben sein. Ferner kann optional wieder die Überschrift (z.B. Hauptmenü) vergrößert dargestellt oder hervorgehoben werden. Zusätzlich kann optional nun in der ersten, kleineren Teilfläche 122 ein Anzeigeaufteilungstastfeld 125 eingeblendet werden, um die Grenze 121 noch weiter in Richtung der ersten Teilfläche 122 zu verschieben und diese beispielsweise auch ganz auszublenden. Zusätzlich kann optional in der größeren, zweiten Teilfläche 124 auch eine Haltetaste als betätigbares Feld eingeblendet werden.

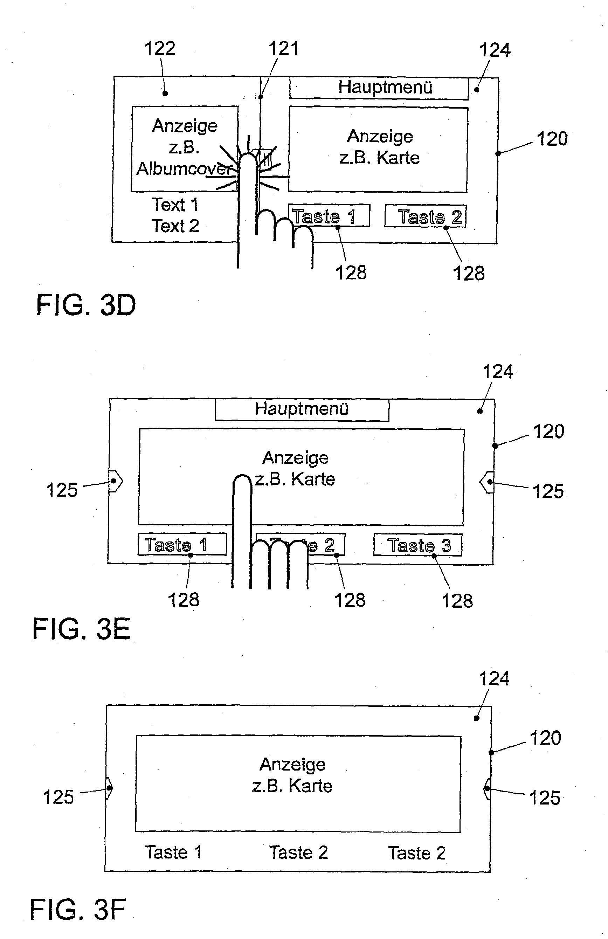

Betätigt nun der Benutzer beispielsweise mit seinem Finger das Anzeigeaufteilungstastfeld 125 in der kleineren, ersten Teilfläche 122, wie es in Fig. 3d dargestellt ist, so kann der wiederzugebende Inhalt der ersten Teilfläche 122 komplett ausgeblendet werden und der wiederzugebende Inhalt der zweiten Teilfläche 124 auf der gesamten Anzeigefläche, also als Vollbild (Fullscreen), angezeigt werden. In anderen Worten, die Zwei-Drittel-Teilfläche kann mit einem Klick auf die Lasche zum Vollbild aufgezogen werden, wie es in Fig. 3d und 3e gezeigt ist.

In Fig. 3e wird der wiederzugebende Inhalt der zweiten Teilfläche 124 als Vollbild wiedergegeben. Da sich der Benutzer mit seiner Hand oder seinem Finger noch in der Nähe der Anzeigeeinrichtung 120 befindet, was durch den Annäherungssensor erfasst werden kann, können die betätigbaren Tasten 128 (z.B. Taste 1, Taste 2 und Taste 3) vergrößert dargestellt oder hervorgehoben werden. Zusätzlich können optional auch Anzeigeaufteilungstastfelder 125 an zwei gegenüberliegenden Rändern der Anzeigeeinrichtung 120 (z.B. links und rechts) in einer vergrößerten Darstellung eingeblendet werden. Ebenso kann optional die Überschrift vergrößert dargestellt oder hervorgehoben werden.

Entfernt sich der Benutzer mit seiner Hand oder seinem Finger von der Anzeigeeinrichtung 120 und geht in eine nicht angenäherte Position, kann weiterhin der wiederzugebende Inhalt in einem Vollbild angezeigt werden. Ferner können die Anzeigeaufteilungstastfelder 125 in einer reduzierten Darstellung eingeblendet sein und die betätigbaren Tasten oder Überschriften nicht vergrößert oder hervorgehoben dargestellt werden, wie es in Fig. 3f dargestellt ist.

Einige Ausführungsbeispiele beziehen sich auf ein fest installiertes Infotainmentsystem eines Fahrzeuges mit einem Informationswiedergabesystem nach dem zuvor beschriebenen Prinzip. Beispielsweise kann der Prozessor eine eigene Einheit oder Teil des Bordcomputers sein. Ferner kann es sich um ein Fahrzeug mit einem festinstallierten Informationswiedergabesystem handeln.

Ausführungsbeispiele können sich auch auf ein erweitertes Splitscreen-Konzept (Teilflächen-Konzept)im Infotainmentbereich beziehen. Beispielsweise können parallele Kontexte (z.B. Karte, Media und Telefon) in einem Infotainmentsystem auf Touchscreenbasis dargestellt (Anzeige/Bedienung) werden. Im Gegensatz zu Splitscreenkonzepten ohne Touchscreen, bei denen z.B. eine umständliche Bedienung (des Touchscreens) über Drehdrücksteller oder durch Aufschalten von zusatzfenstern erfolgt, kann hier ein einfaches und intuitives Bedienkonzept realisiert werden.

Der Splitscreenmodus kann sich permanent über Laschen anbieten und muss nicht immer erst über die Einstellungen verfügbar gemacht werden. Ferner kann eine intuitive Bedienung des Splitscreens (des in Teilflächen geteilten Bildschirms) über einen Touchscreen durch Reinziehen des Splitscreenkonzepts per Drag and Drop (Ziehen und Ablegen) auf dem Touchscreen von links nach rechts oder umgekehrt realisiert werden. Dadurch kann auch eine freie Kombinationsmöglichkeit und gleichzeitige Anzeige und Bedienung von z.B. zwei oder drei der zur Verfügung stehenden Inhalte im System ermöglicht werden.

Der Splitscreen kann über Laschen rechts und links an den Screenseiten (Anzeigeeinrichtungsseiten) verfügbar sein. Wird eine Lasche zur Mitte des Screens mit dem Finger gezogen, kann sich der Screen z.B. in 2/3 und 1/3 aufteilen und eine Bedienung ist möglich. Bei gleichen Inhalten kann sich der Screen in den Full-Screen-Modus umwandeln. Ist z.B. Media und Radio auf, kann das Medium gespielt werden, welches sich auf dem 2/3 Screen (auf der größeren Teilfläche) befindet. Möchte der Benutzer den Full-Screen-Modus (Vollbildmodus) haben, kann eine Lasche zurückgezogen werden und das gewünschte Menü erscheint auf dem Full-Screen. Das Konzept kann z.B. auch auf eine Darstellung von drei parallelen Kontexten (in drei Teilflächen) übertragen werden. Die Inhalte in den Kontextfenstern können auch über hoch und runter Wischen auf dem Touchscreen oder im Raum (Gestensteuerung) gewechselt werden.

Eine Splitscreen-Option kann ständig verfügbar und einfach zu bedienen sein. Ist sie nicht gewünscht, kann auch der Full-Screen beibehalten werden. Es kann eine schnelle und intuitive Bedienung des Splitscreenkonzepts über einen Touchscreen ermöglicht werden.

Die Aufteilung des Bildschirminhalts kann z.B. durch eine Lasche/Button an der Naht (Grenze) zwischen den Screens (Teilflächen) erfolgen und so die Screengrößen gesteuert werden. Der Fullscreen kann beispielsweise durch eine Lasche/Button an der Seite auf 2/3 verkleinert werden. Eine Aufteilung von links 2/3 und rechts 1/3 als Default-Einstellung ist beispielsweise möglich

Durch eine Annäherungssensorik kann z.B. bei Annäherung an 1/3 der Screen auf 2/3 aufgezogen werden. Ferner kann bei Annäherung an 2/3 beispielsweise Tasten/Buttons (bedienbare Felder/Tasten) größer dargestellt/hervorgehoben werden. Zusätzlich oder alternativ kann z.B. bei einer Annäherung an 2/3 eine Haltetaste (Hold-Taste) erscheinen, die den vergrößerten Teil auf 2/3 festhält, oder bei Annäherung an 1/3 kann sich dieser Screen auf 2/3 vergrößern und dann kann mit Hold (Halten) dieser auf 2/3 gehalten werden.

Zur Wahl der Screeninhalte kann bei Annäherung ein Hauptmenü zur Auswahl des Screeninhalts erscheinen.

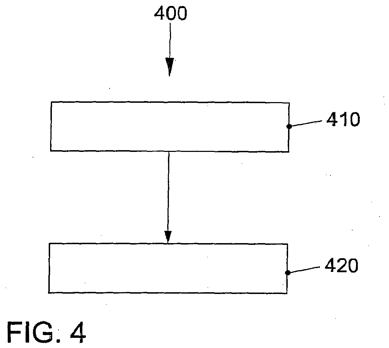

Figur 4 zeigt ein Flussdiagramm eines Verfahrens 400 zur Informationswiedergabe gemäß eines Ausführungsbeispiels. Das Verfahren 400 umfasst ein Erzeugen 410 und Bereitstellen eines Video- oder Steuersignals, sodass durch das Video- oder Steuersignal eine Wiedergabe von zumindest zwei unterschiedlichen Inhalten in zwei aneinandergrenzenden Teilflächen einer Anzeigefläche der Anzeigeeinrichtung veranlasst wird. Ferner umfasst das Verfahren 400, ein Verschieben 420 einer Grenze zwischen den zwei Teilflächen basierend auf einer von der Anzeigeeinrichtung erfassten, durch eine Berührung eines Benutzers verursachten Auswahl eines Anzeigeaufteilungstastfeldes in einer der beiden Teilflächen, basierend auf einer von einer Eingabeeinrichtung erfassten Annäherung eines Benutzers an eine der beiden Teilflächen oder basierend auf einer von einer Eingabeeinrichtung erfassten, vordefinierten Bewegung eines Benutzers in orthogonal zu der Grenze zwischen den zwei Teilflächen gerichteter Richtung, sodass sich ein Verhältnis der Flächenanteile der beiden Teilflächen an der Anzeigefläche der Anzeigevorrichtung zueinander verändert.

Das Verfahren 400 kann weitere optionale, zusätzliche oder alternative Verfahrensschritte umfassen, die optionalen, zusätzlichen oder alternativen Ausgestaltungen entsprechen, die im Zusammenhang mit den zuvor beschriebenen Ausführungsbeispielen erläutert wurden.

Die in der vorstehenden Beschreibung, den nachfolgenden Ansprüchen und den beigefügten Figuren offenbarten Merkmalen können sowohl einzeln wie auch in beliebiger Kombination für die Verwirklichung eines Ausführungsbeispiels in ihren verschiedenen Ausgestaltungen von Bedeutung sein und implementiert werden.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-Ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einer programmierbaren Hardwarekomponente derart zusammenwirken können oder zusammenwirken, dass das jeweilige Verfahren durchgeführt wird.

Eine programmierbare Hardwarekomponente kann durch einen Prozessor, einen Computerprozessor (CPU = Central Processing Unit), einen Grafikprozessor (GPU = Graphics Processing Unit), einen Computer, ein Computersystem, einen anwendungsspezifischen integrierten Schaltkreis (ASIC = Application-Specific Integrated Circuit), einen integrierten Schaltkreis (IC = Integrated Circuit), ein Ein-Chip-System (SOC = System on Chip), ein programmierbares Logikelement oder ein feldprogrammierbares Gatterarray mit einem Mikroprozessor (FPGA = Field Programmable Gate Array) gebildet sein.

Das digitale Speichermedium kann daher maschinen- oder computerlesbar sein. Manche Ausführungsbeispiele umfassen also einen Datenträger, der elektronisch lesbare Steuersignale aufweist, die in der Lage sind, mit einem programmierbaren Computersystem oder einer programmierbare Hardwarekomponente derart zusammenzuwirken, dass eines der hierin beschriebenen Verfahren durchgeführt wird. Ein Ausführungsbeispiel ist somit ein Datenträger (oder ein digitales Speichermedium oder ein computerlesbares Medium), auf dem das Programm zum Durchführen eines der hierin beschriebenen Verfahren aufgezeichnet ist.

Allgemein können Ausführungsbeispiele der vorliegenden Erfindung als Programm, Firmware, Computerprogramm oder Computerprogrammprodukt mit einem Programmcode oder als Daten implementiert sein, wobei der Programmcode oder die Daten dahin gehend wirksam ist bzw. sind, eines der Verfahren durchzuführen, wenn das Programm auf einem Prozessor oder einer programmierbaren Hardwarekomponente abläuft. Der Programmcode oder die Daten kann bzw. können beispielsweise auch auf einem maschinenlesbaren Träger oder Datenträger gespeichert sein. Der Programmcode oder die Daten können unter anderem als Quellcode, Maschinencode oder Bytecode sowie als anderer Zwischencode vorliegen.

Ein weiteres Ausführungsbeispiel ist ferner ein Datenstrom, eine Signalfolge oder eine Sequenz von Signalen, der bzw. die das Programm zum Durchführen eines der hierin beschriebenen Verfahren darstellt bzw. darstellen. Der Datenstrom, die Signalfolge oder die Sequenz von Signalen kann bzw. können beispielsweise dahin gehend konfiguriert sein, um über eine Datenkommunikationsverbindung, beispielsweise über das Internet oder ein anderes Netzwerk, transferiert zu werden. Ausführungsbeispiele sind so auch Daten repräsentierende Signalfolgen, die für eine Übersendung über ein Netzwerk oder eine Datenkommunikationsverbindung geeignet sind, wobei die Daten das Programm darstellen.

Ein Programm gemäß einem Ausführungsbeispiel kann eines der Verfahren während seiner Durchführung beispielsweise dadurch umsetzen, dass dieses Speicherstellen ausliest oder in diese ein Datum oder mehrere Daten hineinschreibt, wodurch gegebenenfalls Schaltvorgänge oder andere Vorgänge in Transistorstrukturen, in Verstärkerstrukturen oder in anderen elektrischen, optischen, magnetischen oder nach einem anderen Funktionsprinzip arbeitenden Bauteile hervorgerufen werden. Entsprechend können durch ein Auslesen einer Speicherstelle Daten, Werte, Sensorwerte oder andere Informationen von einem Programm erfasst, bestimmt oder gemessen werden. Ein Programm kann daher durch ein Auslesen von einer oder mehreren Speicherstellen Größen, Werte, Messgrößen und andere Informationen erfassen, bestimmen oder messen, sowie durch ein Schreiben in eine oder mehrere Speicherstellen eine Aktion bewirken, veranlassen oder durchführen sowie andere Geräte, Maschinen und Komponenten ansteuern.

## Patentansprüche

1. Informationswiedergabesystem (100) in einem Fahrzeug, mit einem Prozessor (110), der ausgelegt ist, um ein Video- oder Steuersignal (112) zu erzeugen und an eine Anzeigeeinrichtung (120) bereitzustellen, sodass durch das Video- oder Steuersignal (112) eine Wiedergabe von zumindest zwei unterschiedlichen Inhalten (103, 105) in zwei aneinander grenzenden Teilflächen (122, 124) einer Anzeigefläche der Anzeigeeinrichtung (120) veranlasst wird,
wobei der Prozessor (110) ausgelegt ist, um das Video- oder Steuersignal (112) zu erzeugen, sodass eine Grenze (121) zwischen den zwei Teilflächen (122, 124) verschiebbar ist
basierend auf einer von der Anzeigeeinrichtung (120) erfassten, durch eine Berührung eines Benutzers verursachten Auswahl eines Anzeigeaufteilungstastfelds (125) in einer der beiden Teilflächen (122, 124), und
basierend auf einer von einer Eingabeeinrichtung (106) erfassten Annäherung eines Benutzers an eine der beiden Teilflächen (122, 124),
sodass sich ein Verhältnis der Flächenanteile der beiden Teilflächen (122, 124) an der Anzeigefläche der Anzeigevorrichtung (120) verändert,
wobei die Anzeigeeinrichtung (120) ein berührungsempfindlicher Bildschirm ist und die Grenze (121) zwischen den zwei Teilflächen (122, 124) basierend auf einer von dem berührungsempfindlichen Bildschirm erfassten, durch eine Berührung eines Benutzers verursachten Betätigung des Anzeigeaufteilungstastfelds (125), das in einer der beiden Teilflächen (122, 124) angeordnet ist, verschoben wird,
wobei der Prozessor (110) das Video- oder Steuersignal (112) erzeugt, sodass das Anzeigeaufteilungstastfeld (125) eine pfeilartige Form oder eine pfeilartige Grafik aufweist, die darauf hinweist, in welche Richtung sich die Grenze (121) bei Berührung des Anzeigeaufteilungstastfelds (125) verschiebt,
wobei der Prozessor (110) ausgelegt ist, um das Video- oder Steuersignal (112) zu erzeugen, sodass die Grenze (121) nur an vordefinierte Stellen verschoben wird,
wobei eine Eingabeeinrichtung (106) ein ortsaufgelöster Annäherungssensor ist, der ausgelegt ist, um eine Annäherung eines Benutzers zu erkennen und festzustellen an welche der beiden Teilflächen (122, 124) sich der Benutzer annähert,
wobei der Prozessor (110) bei einer erfassten Annäherung an eine erste, kleinere Teilfläche der beiden Teilflächen (122, 124) das Video- oder Steuersignal (112) erzeugt, sodass die erste Teilfläche nach dem Verschieben der Grenze (121) größer als die zweite der beiden Teilflächen (122, 124) ist.

2. Informationswiedergabesystem nach Anspruch 1, wobei die Anzeigeeinrichtung (120) ein berührungsempfindlicher Bildschirm ist und der Prozessor (110) bei einer erfassten Annäherung an eine erste, größere Teilfläche der beiden Teilflächen (122, 124) das Video- oder Steuersignal (112) erzeugt, sodass nach erfasster Annäherung zumindest ein in der ersten Teilfläche angeordnetes betätigbares Tastenfeld (128) im Vergleich zu davor größer dargestellt oder hervorgehoben ist.

3. Informationswiedergabesystem nach einem der Ansprüche 1 oder 2, wobei die Anzeigeeinrichtung (120) ein berührungsempfindlicher Bildschirm ist und der Prozessor (110) bei einer erfassten Annäherung an eine erste, größere Teilfläche der beiden Teilflächen (122, 124) das Video- oder Steuersignal (112) erzeugt, sodass nach erfasster Annäherung in der ersten Teilfläche eine Haltetaste als betätigbares Tastenfeld erscheint, wobei durch Betätigung der Haltetaste durch den Benutzer das Verhältnis der Flächenanteile der Teilflächen (122, 124) vorerst konstant gehalten wird.

4. Informationswiedergabesystem nach einem der Ansprüche 1 bis 3, wobei der Prozessor (110) bei einer erfassten Annäherung an eine der beiden Teilflächen (122, 124) das Video- oder Steuersignal (112) erzeugt, sodass nach erfasster Annäherung in der einen Teilfläche ein Menü zur Auswahl eines in der einen Teilfläche wiederzugebenden Inhalts erscheint.

5. Informationswiedergabesystem nach einem der vorhergehenden Ansprüche, wobei eine Eingabeeinrichtung (106) ein berührungsempfindlicher Bildschirm ist, der ausgelegt ist, um die vordefinierte Bewegung auf seiner Oberfläche zu erfassen, oder eine Eingabeeinrichtung (106) ein Kamerasystem ist, das ausgelegt ist, um die vordefinierte Bewegung durch eine Auswertung einer Gestik des Benutzers zu erfassen, wobei der Prozessor (110) ausgelegt ist, um das Video- oder Steuersignal (112) zu erzeugen, sodass die Grenze (121) in Richtung der Bewegung verschoben wird.

6. Informationswiedergabesystem nach einem der vorhergehenden Ansprüche, wobei die Grenze (121) zwischen den beiden Teilflächen (122, 124) im Wesentlichen vertikal zwischen den beiden Teilflächen (122, 124) von einem oberen Rand der Anzeigefläche der Anzeigeeinrichtung (120) zu einem unteren Rand der Anzeigefläche der Anzeigeeinrichtung (120) verläuft.

7. Festinstalliertes Infotainmentsystem eines Fahrzeugs mit einem Informationswiedergabesystem nach einem der vorhergehenden Ansprüche.

8. Verfahren (400) zur Informationswiedergabe mit folgenden Schritten:
Erzeugen (410) und bereitstellen eines Video- oder Steuersignals (112), sodass durch das Video- oder Steuersignal (112) eine Wiedergabe von zumindest zwei unterschiedlichen Inhalten (103, 105) in zwei aneinander grenzenden Teilflächen (122, 124) einer Anzeigefläche der Anzeigeeinrichtung (120) veranlasst wird; und
Verschieben (420) einer Grenze (121) zwischen den zwei Teilflächen (122, 124)
basierend auf einer von der Anzeigeeinrichtung (120) erfassten, durch eine Berührung eines Benutzers verursachten Auswahl eines Anzeigeaufteilungstastfelds in einer der beiden Teilflächen (122, 124), und
basierend auf einer von einer Eingabeeinrichtung (106) erfassten Annäherung eines Benutzers an eine der beiden Teilflächen (122, 124),
sodass sich ein Verhältnis der Flächenanteile der beiden Teilflächen (122, 124) an der Anzeigefläche der Anzeigevorrichtung (120) verändert,
wobei die Anzeigeeinrichtung (120) ein berührungsempfindlicher Bildschirm ist und die Grenze (121) zwischen den zwei Teilflächen (122, 124) basierend auf einer von dem berührungsempfindlichen Bildschirm erfassten, durch eine Berührung eines Benutzers verursachten Betätigung eines Anzeigeaufteilungstastfelds (125), das in einer der beiden Teilflächen (122, 124) angeordnet ist, verschoben wird,
wobei das Video- oder Steuersignal (112) erzeugt wird, sodass das Anzeigeaufteilungstastfeld (125) eine pfeilartige Form oder eine pfeilartige Grafik aufweist, die darauf hinweist, in welche Richtung sich die Grenze (121) bei Berührung des Anzeigeaufteilungstastfelds (125) verschiebt,
wobei das Video- oder Steuersignal (112) erzeugt wird, sodass die Grenze (121) nur an vordefinierte Stellen verschoben wird,
wobei eine Eingabeeinrichtung (106) ein ortsaufgelöster Annäherungssensor ist, der ausgelegt ist, um eine Annäherung eines Benutzers zu erkennen und festzustellen an welche der beiden Teilflächen (122, 124) sich der Benutzer annähert,
wobei der Prozessor (110) bei einer erfassten Annäherung an eine erste, kleinere Teilfläche der beiden Teilflächen (122, 124) das Video- oder Steuersignal (112) erzeugt, sodass die erste Teilfläche nach dem Verschieben der Grenze (121) größer als die zweite der beiden Teilflächen (122, 124) ist.

9. Programm mit einem Programmcode zum Durchführen eines Verfahrens gemäß Anspruch 8, wenn der Programmcode auf einem Computer, einem Prozessor oder einer programmierbaren Hardwarekomponente ausgeführt wird.

## Claims

1. Information reproduction system (100) in a vehicle, with a processor (110) which is designed to generate a video or control signal (112) and deliver it to a display device (120), so that a reproduction of at least two different content elements (103, 105) in two adjacent sub-areas (122, 124) of a display area of the display device (120) is initiated by the video or control signal (112),
wherein the processor (110) is designed to generate the video or control signal (112) so that a boundary (121) between the two sub-areas (122, 124) is movable based on a selection of a display division touch panel (125), detected by the display device (120) and caused by a touch of a user, in one of the two sub-areas (122, 124), and
based on an approach of a user, detected by an input device (106), to one of the two sub-areas (122, 124),
so that a ratio of the area proportions of the two sub-areas (122, 124) on the display area of the display device (120) changes,
wherein the display device (120) is a touch-sensitive screen and the boundary (121) between the two sub-areas (122, 124) is moved on the basis of an actuation, detected by the touch-sensitive screen and caused by a touch of a user, of the display division touch panel (125) which is disposed in one of the two sub-areas (122, 124),
wherein the processor (110) generates the video or
control signal (112) so that the display division touch panel (125) has an arrow-like shape or an arrow-like graphic which indicates the direction in which the boundary (121) moves when the display division touch panel (125) is touched,
wherein the processor (110) is designed to generate the video or control signal (112) so that the boundary (121) is moved only to predefined positions,
wherein an input device (106) is a spatial-resolution proximity sensor which is designed to detect an approach of a user and identify which of the two sub-areas (122, 124) the user is approaching,
wherein the processor (110), in the event of a detected approach to a first, smaller sub-area of the two sub-areas (122, 124), generates the video or control signal (112) so that the first sub-area is larger than the second of the two sub-areas (122, 124) after the boundary (121) has been moved.

2. Information reproduction system according to Claim 1, wherein the display device (120) is a touch-sensitive screen and the processor (110), in the event of a detected approach to a first, larger sub-area of the two sub-areas (122, 124), generates the video or control signal (112) so that, following a detected approach, at least one actuatable keypad (128) disposed in the first sub-area is shown, compared with previously, as larger or is highlighted.

3. Information reproduction system according to either of Claims 1 and 2, wherein the display device (120) is a touch-sensitive screen and the processor (110), in the event of a detected approach to a first, larger sub-area of the two sub-areas (122, 124), generates the video or control signal (112) so that, following a detected approach in the first sub-area, a hold key appears as an actuatable keypad, wherein, through actuation of the hold key by the user, the ratio of the area proportions of the sub-areas (122, 124) is initially kept constant.

4. Information reproduction system according to one of Claims 1 to 3, wherein, in the event of a detected approach to one of the two sub-areas (122, 124), the processor (110) generates the video or control signal (112) so that, following a detected approach in the one sub-area, a menu appears for selection of a content element to be reproduced in the one sub-area.

5. Information reproduction system according to one of the preceding claims, wherein an input device (106) is a touch-sensitive screen which is designed to detect the predefined movement on its surface, or an input device (106) is a camera system which is designed to detect the predefined movement through an evaluation of a gesture of the user, wherein the processor (110) is designed to generate the video or control signal (112) so that the boundary (121) is moved in the direction of the movement.

6. Information reproduction system according to one of the preceding claims, wherein the boundary (121) between the two sub-areas (122, 124) runs essentially vertically between the two sub-areas (122, 124) from an upper edge of the display area of the display device (120) to a lower edge of the display area of the display device (120).

7. Permanently installed infotainment system of a vehicle having an information reproduction system according to one of the preceding claims.

8. Method (400) for information reproduction comprising the following steps:
generating (410) and providing a video or control signal (112) so that a reproduction of at least two different content elements (103, 105) in two adjacent sub-areas (122, 124) of a display area of the display device (120) is initiated by the video or control signal (112); and
moving (420) a boundary (121) between the two sub-areas (122, 124)
based on a selection of a display division touch panel, detected by the display device (120) and caused by a touch of a user, in one of the two sub-areas (122, 124), and
based on an approach of a user, detected by an input device (106), to one of the two sub-areas (122, 124),
so that a ratio of the area proportions of the two sub-areas (122, 124) on the display area of the display device (120) changes,
wherein the display device (120) is a touch-sensitive screen and the boundary (121) between the two sub-areas (122, 124) is moved on the basis of an actuation, detected by the touch-sensitive screen and caused by a touch of a user, of a display division touch panel (125) which is disposed in one of the two sub-areas (122, 124),
wherein the video or control signal (112) is generated so that the display division touch panel (125) has an arrow-like shape or an arrow-like graphic which indicates the direction in which the boundary (121) moves when the display division touch panel (125) is touched,
wherein the video or control signal (112) is generated so that the boundary (121) is moved only to predefined positions,
wherein an input device (106) is a spatial-resolution proximity sensor which is designed to detect an approach of a user and identify which of the two sub-areas (122, 124) the user is approaching,
wherein the processor (110), in the event of a detected approach to a first, smaller sub-area of the two sub-areas (122, 124), generates the video or control signal (112) so that the first sub-area is larger than the second of the two sub-areas (122, 124) after the boundary (121) has been moved.

9. Program having a program code for performing a method according to Claim 8 when the program code is executed on a computer, a processor or a programmable hardware component.

## Revendications

1. Système de reproduction d'informations (100) dans un véhicule, comprenant un processeur (110), qui est configuré pour générer un signal vidéo ou de commande (112) et le fournir à un dispositif d'affichage (120), de sorte qu'une reproduction d'au moins deux contenus (103, 105) différents soit produite dans deux surfaces partielles (122, 124) mutuellement adjacentes d'une surface d'affichage du dispositif d'affichage (120) par le signal vidéo ou de commande (112),
le processeur (110) étant conçu pour générer le signal vidéo ou de commande (112) de telle sorte qu'une limite (121) entre les deux surfaces partielles (122, 124) peut être décalée
en se basant sur une sélection détectée par le dispositif d'affichage (120), causée par un toucher par un utilisateur, d'un pavé tactile de distribution d'affichage (125) dans l'une des deux surfaces partielles (122, 124), et
en se basant sur une approche détectée par un dispositif de saisie (106) de l'une des deux surfaces partielles (122, 124) par un utilisateur,
de sorte qu'un rapport des fractions de surface des deux surfaces partielles (122, 124) à la surface d'affichage du dispositif d'affichage (120) varie,
le dispositif d'affichage (120) étant un écran tactile et la limite (121) entre les deux surfaces partielles (122, 124) étant décalée en se basant sur un actionnement du pavé tactile de distribution d'affichage (125), qui est disposé dans l'une des deux surfaces partielles (122, 124), détecté par l'écran tactile et provoqué par un toucher d'un utilisateur,
le processeur (110) générant le signal vidéo ou de commande (112) de telle sorte que le pavé tactile de distribution d'affichage (125) présente une forme de type flèche ou un graphique de type flèche qui indique la direction dans laquelle se décale la limite (121) lors du toucher du pavé tactile de distribution d'affichage (125),
le processeur (110) étant conçu pour générer le signal vidéo ou de commande (112) de telle sorte que la limite (121) n'est décalée qu'au niveau d'endroits prédéfinis, un dispositif de saisie (106) étant un détecteur d'approche à résolution spatiale qui est conçu pour reconnaître une approche d'un utilisateur et déterminer de laquelle des deux surfaces partielles (122, 124) s'approche l'utilisateur,
le processeur (110) générant le signal vidéo ou de commande (112) dans le cas d'une approche détectée d'une première, plus petite surface partielle des deux surfaces partielles (122, 124), de sorte que la première surface partielle, après le décalage de la limite (121), est plus grande que la deuxième des deux surfaces partielles (122, 124).

2. Système de reproduction d'informations selon la revendication 1, le dispositif d'affichage (120) étant un écran tactile et le processeur (110), dans le cas d'une approche détectée d'une première, plus grande surface partielle des deux surfaces partielles (122, 124), générant le signal vidéo ou de commande (112) de telle sorte qu'après l'approche détectée, au moins un clavier (128) actionnable disposé dans la première surface partielle est représenté plus grand ou mis en valeur par rapport à son état précédent.

3. Système de reproduction d'informations selon l'une des revendications 1 et 2, le dispositif d'affichage (120) étant un écran tactile et le processeur (110), dans le cas d'une approche détectée d'une première, plus grande surface partielle des deux surfaces partielles (122, 124), générant le signal vidéo ou de commande (112) de telle sorte qu'après l'approche détectée, une touche d'arrêt sous la forme d'un clavier actionnable apparaît dans la première surface partielle, le rapport des fractions de surface des surfaces partielles (122, 124) étant à ce stade maintenu constant par un actionnement de la touche d'arrêt par l'utilisateur.

4. Système de reproduction d'informations selon l'une des revendications 1 à 3, le processeur (110), dans le cas d'une approche détectée de l'une des deux surfaces partielles (122, 124), générant le signal vidéo ou de commande (112) de telle sorte qu'après l'approche détectée, un menu servant à sélectionner un contenu à reproduire dans ladite surface partielle apparaisse dans ladite surface partielle.

5. Système de reproduction d'informations selon l'une des revendications précédentes, un dispositif de saisie (106) étant un écran tactile qui est conçu pour détecter un mouvement prédéfini sur sa surface, ou un dispositif de saisie (106) étant un système de caméra qui est conçu pour détecter le mouvement prédéfini par une interprétation d'une gestuelle de l'utilisateur, le processeur (110) étant conçu pour générer le signal vidéo ou de commande (112) de telle sorte que la limite (121) est décalée dans la direction du mouvement.

6. Système de reproduction d'informations selon l'une des revendications précédentes, la limite (121) entre les deux surfaces partielles (122, 124) suivant un tracé sensiblement vertical entre les deux surfaces partielles (122, 124) d'un bord supérieur de la surface d'affichage du dispositif d'affichage (120) à un bord inférieur de la surface d'affichage du dispositif d'affichage (120).

7. Système d'infodivertissement installé à demeure dans un véhicule, comprenant un système de reproduction d'informations selon l'une des revendications précédentes.

8. Procédé (400) de reproduction d'informations, comprenant les étapes suivantes :
génération (410) et fourniture d'un signal vidéo ou de commande (112), de sorte qu'une reproduction d'au moins deux contenus (103, 105) différents soit produite dans deux surfaces partielles (122, 124) mutuellement adjacentes d'une surface d'affichage du dispositif d'affichage (120) par le signal vidéo ou de commande (112) ; et
décalage (420) d'une limite (121) entre les deux surfaces partielles (122, 124)
en se basant sur une sélection détectée par le dispositif d'affichage (120), causée par un toucher par un utilisateur, d'un pavé tactile de distribution d'affichage dans l'une des deux surfaces partielles (122, 124), et
en se basant sur une approche détectée par un dispositif de saisie (106) de l'une des deux surfaces partielles (122, 124) par un utilisateur,
de sorte qu'un rapport des fractions de surface des deux surfaces partielles (122, 124) à la surface d'affichage du dispositif d'affichage (120) varie,
le dispositif d'affichage (120) étant un écran tactile et la limite (121) entre les deux surfaces partielles (122, 124) étant décalée en se basant sur un actionnement d'un pavé tactile de distribution d'affichage (125), qui est disposé dans l'une des deux surfaces partielles (122, 124), détecté par l'écran tactile et provoqué par un toucher d'un utilisateur,
le signal vidéo ou de commande (112) étant généré de telle sorte que le pavé tactile de distribution d'affichage (125) présente une forme de type flèche ou un graphique de type flèche, qui indique dans la direction de laquelle se décale la limite (121) lors du toucher du pavé tactile de distribution d'affichage (125), le signal vidéo ou de commande (112) étant généré de telle sorte que la limite (121) n'est décalée qu'au niveau d'endroits prédéfinis,
un dispositif de saisie (106) étant un détecteur d'approche à résolution spatiale qui est conçu pour reconnaître une approche d'un utilisateur et déterminer de laquelle des deux surfaces partielles (122, 124) s'approche l'utilisateur,
le processeur (110) générant le signal vidéo ou de commande (112) dans le cas d'une approche détectée d'une première, plus petite surface partielle des deux surfaces partielles (122, 124), de sorte que la première surface partielle, après le décalage de la limite (121), est plus grande que la deuxième des deux surfaces partielles (122, 124).

9. Programme comprenant un code de programme destiné à mettre en œuvre un procédé selon la revendication 8 lorsque le code de programme est exécuté sur un ordinateur, un processeur ou un composant matériel programmable.
